(19) Europäisches Patentamt
European Patent Office
Office européen des brevets

(11) EP 0 676 305 B1

(12) **EUROPEAN PATENT SPECIFICATION**

(45) Date of publication and mention of the grant of the patent:
**22.07.1998 Bulletin 1998/30**

(51) Int. Cl.[6]: **B60C 11/03**, B60C 11/13

(21) Application number: **95302357.9**

(22) Date of filing: **10.04.1995**

(54) **Pneumatic tyre**

Luftreifen

Bandage pneumatique

(84) Designated Contracting States:
**DE FR GB**

(30) Priority: **11.04.1994 JP 98035/94**

(43) Date of publication of application:
**11.10.1995 Bulletin 1995/41**

(73) Proprietor:
**SUMITOMO RUBBER INDUSTRIES LIMITED**
**Kobe-shi, Hyogo-ken (JP)**

(72) Inventor: **Sugihara, Hideaki**
**Amagasaki-shi, Hyogo-ken (JP)**

(74) Representative:
**Stewart, Charles Geoffrey**
**Dunlop Tyres Ltd**
**Fort Dunlop, Erdington, Birmingham B24 9QT (GB)**

(56) References cited:
**EP-A- 0 590 526**
**EP-A- 0 593 288**
**FR-A- 2 484 336**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Xerox (UK) Business Services
2.16.3/3.4

EP 0 676 305 B1

## Description

The present invention relates to a pneumatic tyre, particularly a low aspect radial tyre for passenger vehicles, capable of providing higher cornering power so as to improve steering stability, while enhancing dry and wet grip performances and providing reduction of pass-by noise.

Recently, as automobiles become quieter tyre noise has come to contribute at a higher ratio to the total noise level of an automobile, and its reduction is demanded. Such noise reduction is specifically desired in a range around 1 kHz which forms the peak frequency of tyre noise, and sounds due to a columnar resonance generated by the circumferential grooves is one of the main sound sources in such high frequency range.

On the other hand, in order to maintain the wet grip performance, the tread of tyre is generally provided with a plurality of circumferential grooves continuously extending in the circumferential direction.

In such a tyre, when it is in contact with the ground, a kind of air column is formed by the road surface and the circumferential groove. Then a sound of specific wavelength, which is double the wave length of the air column is caused by airflow within the column during running.

Such a phenomenon is referred to as columnar resonance, and provides the main source of noise at 800 to 1.2 kHz. The wavelength of the columnar resonance sound is approximately constant to give a constant frequency regardless of the tyre's speed, and this noise increases sound inside and outside an automobile.

Incidentally, since this noise around 1 khz is a sound easily herd by the human ear, the increase of noise with this frequency greatly influences tyre noise performance.

In order to prevent columnar resonance, although reduction of the number or volume of the circumferential grooves is known, such reductions lead to a lower wet grip performance.

On the other hand, although the wet grip performance can be increased contrarily by increasing the number or volume of circumferential grooves, a simple increase causes reduction of dry grip performance, because the ground-contact area is reduced. Also, this causes a reduction of steering stability as the rigidity of the tread pattern is reduced, in addition to the increase in tyre noise.

To achieve such contradictory performances, it has been attempted to satisfy both wet grip performance and steering stability by broadening the groove width of the circumferential groove, and arranging the number, such as two or four, about the tyre equator.

A tyre having an extra wide circumferential groove with angled, rounded groove walls in accordance with the features of the preamble of claim 1 for removing water from the tyre footprint is known from EP-A-0590526.

In the tyre of such constitution, however, when the load acting on the tyre shifts in the tyre axial direction at the time of cornering, since the groove volume is large, the ground contact pressure increases abnormally at the load shifting side, and the steering stability in cornering, or the so-called turning steering stability is inferior.

It is hence a primary object of the invention to provide a pneumatic tyre capable of improved cornering power so as to improve the steering stability including turning steering stability while enhancing the dry and wet grip performances and lowering the tyre noise.

According to the present invention, a pneumatic tyre comprises a tread part having one circumferential wide groove extending continuously in the tyre circumferential direction, wherein a centroid of a cross-section of the circumferential wide groove deviates from the tyre's equatorial plane so as to divide the tread part into a narrow tread section and a broad tread section, one of the groove walls of the circumferential wide groove extends along a curve convex outwardly in the tyre radial direction from one of the bottom edge of the circumferential wide groove and is smoothly connected to the outer surface of the tread part, and when the tyre is mounted on its regular rim, inflated to regular internal pressure and has applied its normal load, the groove width GW of the circumferential wide groove is not less than 35 mm and not more than 0.35 times the ground contact width TW of the tread part characterised in that the centroid is positioned on the middle plane between the tyre's equatorial plane and the tread edge.

The other groove wall of the circumferential wide groove may extend approximately straight from the other bottom edge of the circumferential wide groove so as to cross the outer surface of the tread part. The broad tread section may be provided with a circumferential fine groove with a groove width W1 of 1.5 to 7 mm. The arcuate groove wall of the circumferential wide groove is preferably connected to the outer surface of the broad tread section.

An embodiment of the present invention will now be described, by way of example, referring to the attached diagrammatic drawings, in which:

Fig. 1 is a sectional view showing an embodiment of the invention;
Fig. 2 is a enlarged sectional view showing the configuration of the tread part in Fig. 1;
Fig. 3 is a partial flat view showing the tread pattern of the tyre in Fig. 1;
Fig. 4 is a plan view showing the ground-contacting tread area of the tyre in Fig. 1 when a normal load is applied;
Fig. 5 is a graph showing the relation between the groove width and pass-by noise;
Fig. 6 is an enlarged sectional view showing another example of a configuration of a tread part;

Fig. 7 is a partial flat view showing the tread pattern of the tyre in Fig. 6;

Fig. 8 is an enlarged sectional view showing still another example of a configuration of the tread part;

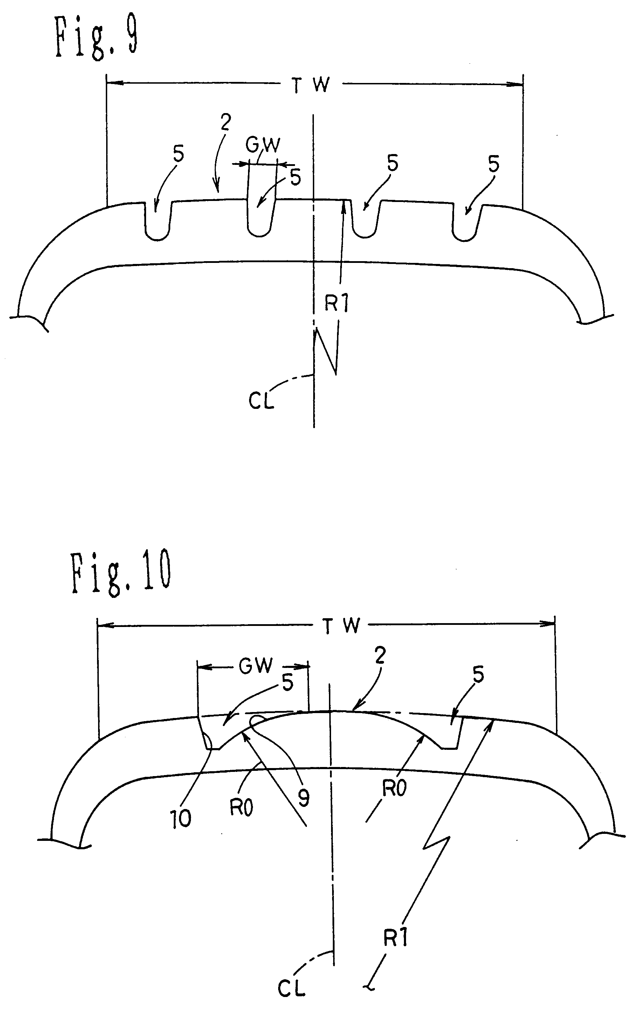

Fig. 9 is a sectional view showing a configuration of the tread in a conventional tyre; and

Fig. 10 is a sectional view showing a configuration of the tread in a comparative tyre of Table 1.

Fig. 1 shows a tyre 1 of the invention in its normal state mounted on its regular rim R and inflated to its regular internal pressure. The regular rim is the rim officially approved for the tyre by for example JATMA (Japan), TRA (USA), ETRTO (Europe) and the like; the regular internal pressure is the maximum air pressure for the tyre officially specified in Air-pressure/Max.-loads Table by for example JATMA, TRA, ETRTO and the like; and the normal load is the maximum load for the tyre officially specified in Air-pressure/Max.-loads Table by for example JATMA, TRA, ETRTO and the like.

The tyre 1 comprises a pair of bead parts 14 each having a bead core 15, sidewall parts 13 extending from the bead parts 14 outwardly in the tyre radial direction, and a tread part 2 linking their outer ends. The aspect ratio is between 0.4 and 0.6 to provide a low aspect tyre for passenger vehicles.

(Aspect ratio = sectional height / tyre width.)

A radial carcass 16 comprising two plies 16A, 16B extends between the bead parts 14. Both edges of the carcass 16 are folded back from the inside to the outside around the bead cores 15, and a belt layer 17 is provided above the carcass 16 and radially inwards of the tread part 2.

In addition, a rubber bead apex 18 extending radially outward from each bead core 15 is provided between the main part of the carcass 16 and the folded back part thereof so as to maintain the shape and rigidity of the bead part 14.

The belt layer 17 comprises plural belt plies of cords aligned at an angle of 15 to 30 degrees to the tyre equator and coated by a topping rubber. The belt cords have a high tensile strength, such as steel or aromatic polyamide, and are arranged to cross to each other between the belt plies. For the carcass cords, in the case of a tyre for passenger vehicles, such organic fibre cords as nylon, rayon or polyester may be generally employed.

The tread part 2 has one circumferential wide groove 5 formed asymmetrically in the groove sectional shape and extending continuously substantially in the circumferential direction.

The circumferential wide groove 5 comprises a groove bottom 7 substantially parallel to the outer surface 11 of the tread part 2, an arcuate groove wall 9 extending along a curve convex outwardly in the tyre radial direction from one groove bottom edge 7a of the groove bottom 7 so as to connect smoothly with the outer surface 11 of the tread part 2 at an upper wall point 9a, and an oblique groove wall 10 extending approximately straight from the other groove bottom edge 7b so as to intersect the outer surface 11 of the tread part 2 at the upper wall point 10a.

Incidentally, when a normal load is applied to the tyre in the normal state, as shown in Fig. 4, a ground-contacting tread area F where the tread 2 contacts with the ground is obtained. The ground-contacting tread area F is composed of an area F1, where the outer surface 11 of the tread part 2 contacts the ground, and an area F2, where an upper region 9S of the arcuate groove wall 9 contacts the ground.

Then, the ground contact width TW of the tread part 2 is defined as the length between the axially outer edges of the ground-contacting tread area F, that is the tread edges E1, E2. The groove width GW of the circumferential wide groove 5, when a normal load is applied to the tyre in the normal state, is defined as the length from the upper wall point 10a of the oblique groove wall 10 to the upper region 9S of the arcuate groove wall 9.

The configuration of the tread part 2 is formed as a single arc having a centre on the tyre's equatorial plane CL and a large radius of curvature R1. If this radius of curvature R1 is small, the ground contact area decreases, which may lead to decline of the grip performance on the dry road surface, or steering stability in cornering. The radius of curvature R1 is preferably 3 times or more of the ground contact width TW of the tread part 2, and its upper limit may be permitted to approach a straight line parallel to the tyre axis.

The groove depth D of the circumferential groove 5 measured from the groove bottom 7 to the outer surface 11 of the tread part 2 is set in the range of 4 to 8% of the ground contact width TW of the tread such as, for example, 7.5 to 15.0 mm, preferably 8.4 mm for a tyre of 205/55R15 in size.

A centroid G of the groove sectional shape of the circumferential wide groove 5 is displaced in the axial direction from the tyre's equatorial plane CL, so that the tread part 2 is divided into a narrow tread section 3 and a broad tread section 4. In the embodiment, the centroid G of the groove sectional shape is disposed on the middle plane between the tyre's equatorial plane CL and one tread edge E1. The arcuate groove wall 9 then comes into contact with the outer surface of the broad tread part 4, and the oblique groove wall 10 crosses the outer surface of the narrow tread section 3.

By dividing the tread part 2 into the narrow tread section 3 and the broad tread section 4 as mentioned above, the shape of the ground-contacting tread area F is made asymmetrical about the tyre's equatorial plane CL as shown in Fig. 4. By then fitting the tyre on a vehicle so that the narrow tread section 3 is positioned inwards of the vehicle, when cornering the load is shifted on to the broad tread section 4. As a result, the tread part 2 positioned at the outside of the vehicle where the ground contact pressure is high in cornering is increased in ground contact area and grounding rigidity, so that the steering stability in cornering and cornering performance is enhanced.

On the other hand, since the groove depth D of the circumferential groove 5 gradually increases because the upper region 9S of the arcuate groove wall 9 comes in contact with the ground, and the circumferential groove has a wide groove width GW, the water discharge performance on the tread surface is improved, and hydroplaning phenomenon is decreased, so that the wet grip performance is enhanced.

In the embodiment, the arcuate groove wall 9 is formed by a single arc with a radius of curvature R0 as shown in Figs. 1 and 2, but it may be formed as an elliptical arc or other quadratic curve, or may be formed by smoothly connecting two or more different convex curves.

The oblique groove wall 10 is, also, inclined at an angle θ of 15 degrees or less, or preferably 5 degrees or less to the normal on the outer surface 11 of the tread part 2, so that an edge effect with a road surface is provided at the upper wall point 10a to help maintain the dry grip performance by increasing lateral force. In addition, by defining the angle θ within the above range, the dimensional change of the circumferential groove 5 due to wear progress is suppressed. Meanwhile, the oblique groove wall 10 may be connected to the groove bottom 7 or the outer surface 11 of the tread part 2 through an arc.

The groove width GW of the circumferential wide groove 5 is defined to be not less than 35 mm and no more than 0.35 times the ground contact width TW of the tread part 2.

Having defined the dimension of the groove width GW, the relation between the groove width GW and pass-by noise was checked experimentally. In a tyre size of 205/55R15, as shown in Fig. 5, at groove widths GW of 7 to 35 mm, pass-by noise was poor, but when the groove width GW is less than 7 mm or more than 35 mm, it was confirmed pass-by noise was reduced. Since the pass-by noise is attributable to the air column resonance, it varies with the size of the groove width GW itself, regardless of the tyre size.

On the basis of this result, the groove width GW is defined as 35 mm or more. In addition, because the upper region 9S of the arcuate groove wall 9 comes in contact with the ground as mentioned above, the ground-contacting area F2 is provided with widened parts 9A at the front and the back of the ground-contacting centre Q as shown in Fig. 4, thereby preventing air column resonance and decreasing the pass-by noise more effectively. Besides, if the groove width exceeds 0.35 times the ground contact tread width TW, the ground contact pressure becomes excessive, and wear resistance is inferior and durability is lowered.

The broad tread section 4 is provided with a fine groove 6 extending straight and continuously in the circumferential direction in the embodiment. The width W1 of this fine groove 6 is set in the range of 1.5 to 7 mm, and the groove depth D1 of the fine groove 6 is defined in a range of 0.4 to 0.9 times the groove depth D of the circumferential wide groove 5. In the embodiment, the fine groove 6 is positioned nearly on the middle plane between the tyre's equatorial plane CL and other tread edge E2.

By providing such a fine groove 6, the pattern rigidity of the broad tread section 4 can be controlled properly, and the water discharge performance in the broad tread section 4 is further enhanced while providing a heat radiation effect and low noise characteristic. Incidentally, if the groove width W1 is larger than 7.5 mm, and the groove depth D1 is more than 0.9 times the groove depth D, air column resonance is generated to worsen the tyre noise. Also if the groove depth D1 is less than 1.5 mm or less than 0.4 times the groove width D, the heat radiation effect is insufficient.

The fine groove 6 may be disposed at any desired position of the broad tread section 4 as required, and particularly by setting at the symmetrical position of the circumferential groove 5 about the tyre's equatorial plane CL as in this embodiment, the running stability is improved, especially in straight running performance.

The broad tread section 4, if the wet and dry grip performance can be sufficiently exhibited by one circumferential groove 5 only, may be formed without using any fine groove as in Fig. 6, or, as indicated by a single dot chain line in Fig. 6, the fine groove 6 may be disposed on the tyre's equatorial plane CL. By disposing the fine groove 6 on the tyre's equatorial plane CL, the water discharge performance is enhanced, and the wet grip performance may be further improved.

In the embodiment, the narrow tread section 3 and the broad tread section 4 are respectively provided with lateral fine grooves 22. The lateral fine grooves 22 extend towards the outside of the tyre at an inclination angle of 10 degrees or more to the tyre axial direction, and the outer ends thereof open at the tread edges E1, E2. The lateral fine grooves 22 have a groove depth D2 of 0.4 to 0.9 times the groove depth D of the circumferential wide groove 5. If the groove depth D2 is more than 0.9 times the groove depth D, or the inclination angle is less than 10 degrees, then the pitch noise of the lateral fine groove 22 is excessively high. If the groove depth D2 is less than 0.4 times the groove depth D, a sufficient heat radiation effect is not obtained.

In the lateral fine grooves 22, the angle of the groove walls of the grooves 22 to a normal to the outer surface 11 of the tread part 2, that is, the inclination gradient of the groove walls is set at 15 degrees or less, more preferably 5 degrees or less, respectively, and any dimensional change of the fine groove 22 due to wear of tyre is thereby controlled.

In the embodiment, circumferential fine grooves 23, 23 having a similar construction to the circumferential fine groove 6 are disposed near the tread edges E1, E2, thereby further improving the steering stability in cornering.

Fig. 8 shows example of the configuration of the tread part 2. In this embodiment, the arcuate groove wall 9 comes into contact with the outer surface of the narrow tread section 3, and the oblique groove wall 10 crosses the outer surface of the broad tread section 4. The lateral fine grooves 22 provided in the narrow or broad tread sections 3, 4 may be connected to each other in the tyre axial direction by a circumferential fine grove or sipes 24 having substantially no groove width, as shown in Fig 7, and the invention may be modified in various modes.

As an example to show the effect of the invention a tyre of 205/55R15 in size was produced according to the specifications shown in Table 1, and measured for pass-by noise, cornering power, hydroplaning-inducing speed and steering stability. The results of the measurement were compared and shown in the table. The tyres were tested and measured mounted on their regular rim R and inflated to regular internal pressure.

【table 1】

| | Embodiment 1 | Embodiment 2 | Comparison 1 | Comparison 2 |
|---|---|---|---|---|
| Tread Profile | Fig. 6, 7 | Fig. 2, 3 | Fig. 10 | Fig. 9 |
| Ground-Contacting Tread Width (TW) mm | 168 | 168 | 168 | 168 |
| Circumferential Groove ; | | | | |
| · Number of Wide Groove | 1 | 1 | 2 | |
| · Number of Fine Groove | — | 1 | — | 4 |
| · Total Number of Grooves | 1 | 2 | 2 | |
| · Groove Width (GW) mm | 38 | 38 | 38 | 9.5 × 2 |
| · Groove Width (W1) mm | — | 7 | — | 9 × 2 |
| · Groove Depth (D) mm | 10 | 10 | 10 | 10 |
| · Total Groove Width (ΣGW+ΣW1) mm | 38 | 45 | 76 | 37 |
| · Ratio (GW/TW) % | 22.6 | 22.6 | 22.6 | 5.5 |
| · Ratio(ΣGW+ΣW1)/TW % | 22.6 | 26.8 | 45 | 22 |
| Radius (R1) of Tread Surface mm | 520 | 520 | 520 | 520 |
| Radius (R0) of Arcuate Groove Wall mm | 85 | 85 | 85 | — |
| Pass-by Noise (dBA) | 72.0 | 72.5 | 71.5 | 73.8 |
| Cornering Power (index *1) | 105 | 104 | 89 | 100 |
| Hydroplaning-Inducing Speed (index *1) | 125 | 129 | 145 | 100 |
| Steering Stability (index *2) | | | | |
| · Installing a tire to direct a broad tread section outward of a car. | 7 | 7 | 5 | 6 |
| · Installing a tire to direct a broad tread section inward of a car. | 6 | 6 | | |

*1 Indicated as the index with the comparison 2 taken as 100. The greater figure means the better performance.

*2 Indicated as the index 10 with the comparison 1 taken as 5. The greater figure means the better performance.

## Claims

1. A pneumatic tyre (1)comprising a tread part (2) having one circumferential wide groove (5) continuously extending in the tyre circumferential direction, wherein a centroid (G) of a cross-section of the circumferential wide groove (5) deviates from the tyre's equatorial plane (CL) so as to divide the tread part (2) into a narrow tread section (3) and a broad tread section (4), one (9) of the groove walls (9,10) of the circumferential wide groove (5) extends along a curve convex outwardly in the tyre radial direction from one (7a) of the bottom edge (7a,7b) of the circumferential wide groove (5) and is smoothly connected to the outer surface (11) of the tread part (2), and when the tyre is mounted on its regular rim (R), inflated to regular internal pressure and has applied its normal load, the groove width (GW) of the circumferential wide groove (5) is not less than 35 mm and not more than 0.35 times the ground contact width TW of the tread part (2), characterised in that the centroid (G) is positioned on the middle plane between the tyre's equatorial plane (CL) and the tread edge (E1).

**2.** A pneumatic tyre according to claim 1, characterised in that the broad tread section (4) is provided with a fine groove (6) extending continuously in the tyre circumferential direction and having a groove width (W1) in a range of 1.5 to 7 mm.

**3.** A pneumatic tyre according to claim 1, characterised in that the fine groove (6) is positioned on the middle plane (CL) between the tyre equatorial plane and the tread edge (E2).

**4.** A pneumatic tyre according to claim 1, characterised in that the fine groove (6) is positioned on the tyre equatorial plane (CL).

**5.** A pneumatic tyre according to any of claims 1 to 4, characterised in that the other one (10) of the groove walls (9,10) of the circumferential wide groove (5) extends approximately straight from the other bottom edge (7b) of the circumferential wide groove (5) and crosses the outer surface (11) of the tread part (2).

**6.** A pneumatic tyre according to any of claims 1 to 5, characterised in that the arcuate groove wall (9) of the circumferential wide groove (5) is smoothly connected to the outer surface (11) of the broad tread section.

**7.** A pneumatic tyre according to any of claims 1 to 6, characterised in that the arcuate groove wall (9) of the circumferential wide groove (5) is smoothly connected to the outer surface (11) of the narrow tread section.

**Patentansprüche**

**1.** Luftreifen (1) umfassend einen Laufflächenteil (2) mit einer weiten Umfangsnut (5), die sich kontinuierlich in der Reifenumfangsrichtung erstreckt, wobei ein Schwerpunkt (G) eines Querschnitts der weiten Umfangsnut (5) von der Äquatorialebene (CL) des Reifens abweicht, um den Laufflächenteil (2) in einen schmalen Laufflächenabschnitt (3) und einen breiten Laufflächenabschnitt (4) zu unterteilen, wobei eine (9) der Nutwände (9, 10) der weiten Umfangsnut (5) sich entlang einer Kurve konvex in der Reifenradialrichtung von einem (7a) der Unterseitenränder (7a, 7b) der weiten Umfangsnut (5) nach außen erstreckt und mit der Außenfläche (11) des Laufflächenteils (2) glatt verbunden ist, und wobei, wenn der Reifen auf seine reguläre Felge (R) aufgezogen, auf seinen regulären Innendruck aufgepumpt und auf ihn seine normale Last aufgebracht ist, die Nutbreite (GW) der weiten Umfangsnut (5) nicht kleiner als 35 mm und nicht größer als das 0,35-fache der Bodenkontaktbreite (TW) des Laufflächenteils (2) ist
**dadurch gekennzeichnet,**
daß der Schwerpunkt (G) auf der Mittelebene zwischen der Äquatorialebene (CL) des Reifens und dem Laufflächenrand (E1) positioniert ist.

**2.** Luftreifen nach Anspruch 1,
**dadurch gekennzeichnet,**
daß der breite Laufflächenabschnitt (4) mit einer dünnen Nut (6) versehen ist, die sich kontinuierlich in der Reifenumfangsrichtung erstreckt und eine Nutbreite (W1) im Bereich von 1,5 bis 7 mm aufweist.

**3.** Luftreifen nach Anspruch 1,
**dadurch gekennzeichnet,**
daß die dünne Nut (6) auf der Mittelebene (CL) zwischen der Reifenäquatorialebene und dem Laufflächenrand (E2) positioniert ist.

**4.** Luftreifen nach Anspruch 1,
**dadurch gekennzeichnet,**
daß die dünne Nut (6) auf der Reifenäquatorialebene (CL) positioniert ist.

5. Luftreifen nach einem der Ansprüche 1 bis 4,
**dadurch gekennzeichnet,**
daß die andere (10) der Nutwände (9, 10) der weiten Umfangsnut (5) sich näherungsweise gerade von dem anderen Unterseitenrand (7b) der weiten Umfangsnut (5) erstreckt und die Außenfläche (11) des Laufflächenteils (2) kreuzt.

6. Luftreifen nach einem der Ansprüche 1 bis 5,
**dadurch gekennzeichnet,**
daß die gekrümmte Nutwand (9) der weiten Umfangsnut (5) glatt mit der Außenfläche (11) des breiten Laufflächenabschnitts verbunden ist.

7. Luftreifen nach einem der Ansprüche 1 bis 6,
**dadurch gekennzeichnet,**
daß die gekrümmte Nutwand (9) der weiten Umfangsnut (5) glatt mit der Außenfläche (11) des schmalen Laufflächenabschnitts verbunden ist.

**Revendications**

1. Pneumatique (1) comprenant une partie (2) de bande de roulement ayant une gorge circonférentielle large (5) disposée de façon continue dans la direction circonférentielle du pneumatique, dans lequel un centroïde (G) de la section de la gorge circonférentielle large (5) s'écarte du plan équatorial (CL) du pneumatique afin que la partie (2) de bande de roulement soit divisée en un tronçon étroit (3) et un tronçon large (4) de bande de roulement, l'une (9) des parois (9, 10) de la gorge circonférentielle large (5) s'étendant suivant une courbe convexe vers l'extérieur dans la direction radiale du pneumatique depuis un bord (7a) des bords inférieurs (7a, 7b) de la gorge circonférentielle large (5) et est raccordée régulièrement à la surface externe (11) de la partie (2) de bande de roulement, et, lorsque le pneumatique est monté sur sa jante normale (R), gonflé à sa pression interne normale et subit l'application de sa charge normale, la largeur (GW) de la gorge circonférentielle large (5) n'est pas inférieure à 35 mm ni supérieure à 0,35 fois la largeur TW de contact avec le sol de la partie (2) de bande de roulement, caractérisé en ce que le centroïde (G) se trouve dans le plan médian compris entre le plan équatorial (CL) du pneumatique et le bord (E1) de la bande de roulement.

2. Pneumatique selon la revendication 1, caractérisé en ce que le tronçon large (4) de bande de roulement a une gorge fine (6) qui s'étend de façon continue dans la direction circonférentielle du pneumatique et qui a une largeur (W1) de gorge comprise entre 1,5 et 7 mm.

3. Pneumatique selon la revendication 1, caractérisé en ce que la gorge fine (6) se trouve sur le plan médian (CL) entre le plan équatorial du pneumatique et le bord (E2) de la bande de roulement.

4. Pneumatique selon la revendication 1, caractérisé en ce que la gorge fine (6) se trouve sur le plan équatorial (CL) du pneumatique.

5. Pneumatique selon l'une quelconque des revendications 1 à 4, caractérisé en ce que l'autre (10) des parois (9, 10) de la gorge circonférentielle large (5) s'étend approximativement sous forme rectiligne depuis l'autre bord inférieur (7b) de la gorge circonférentielle large (5) et recoupe la surface externe (11) de la partie (2) de bande de roulement.

6. Pneumatique selon l'une quelconque des revendications 1 à 5, caractérisé en ce que la paroi courbe (9) de la gorge circonférentielle large (5) est raccordée régulièrement à la surface externe (11) du tronçon large de la bande de roulement.

7. Pneumatique selon l'une quelconque des revendications 1 à 6, caractérisé en ce que la paroi courbe (9) de la gorge circonférentielle large (5) est raccordée régulièrement à la surface externe (11) du tronçon étroit de la bande de roulement.

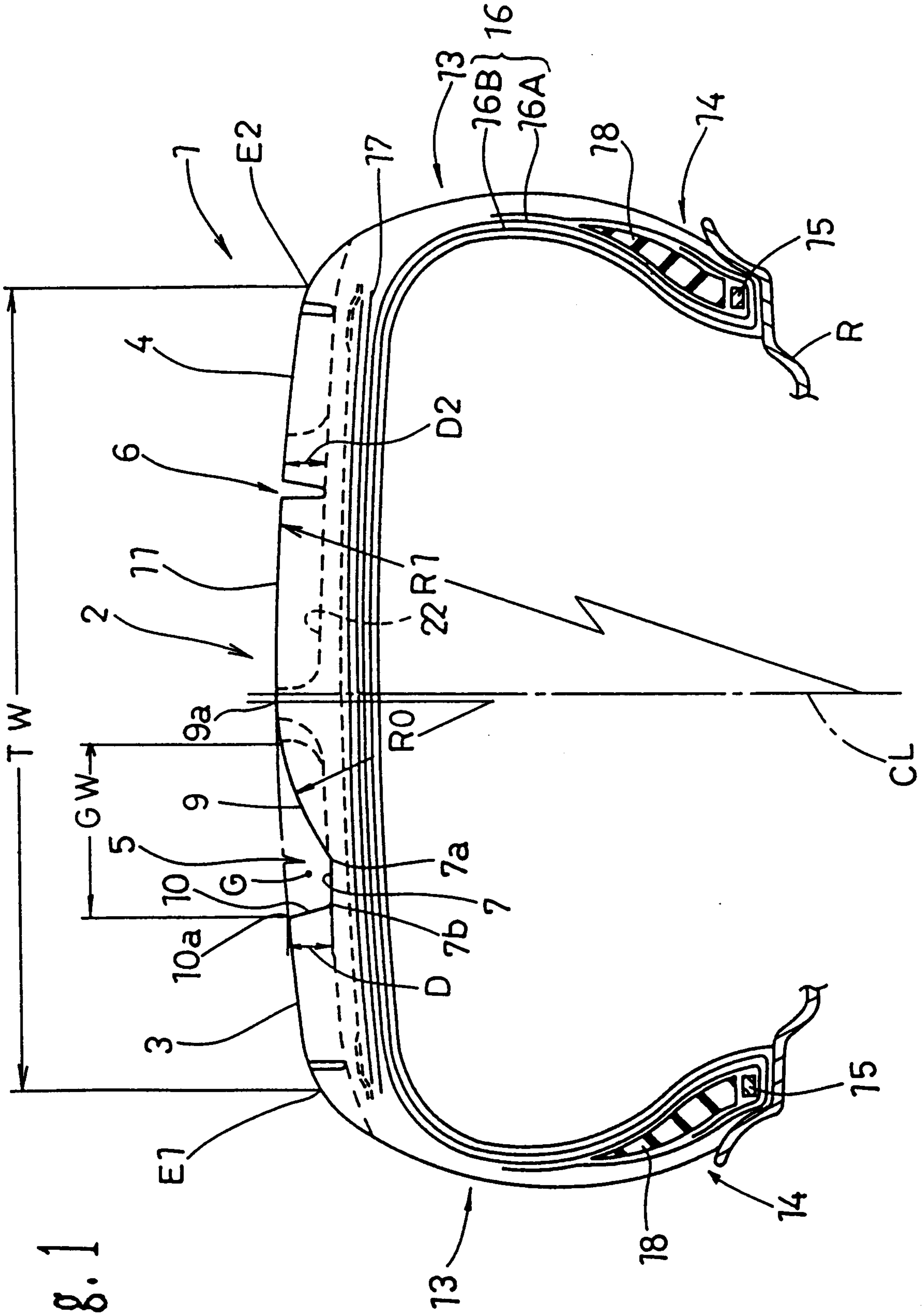
1
E2
17
13
16B
16A
16
18
14
15
R
4
6
D2
R1
11
22
2
9a
R0
CL
T W
G W
9
5
7a
G
10
7
10a
7b
D
3
E1
13
18
14
15

Fig. 1

Fig. 2

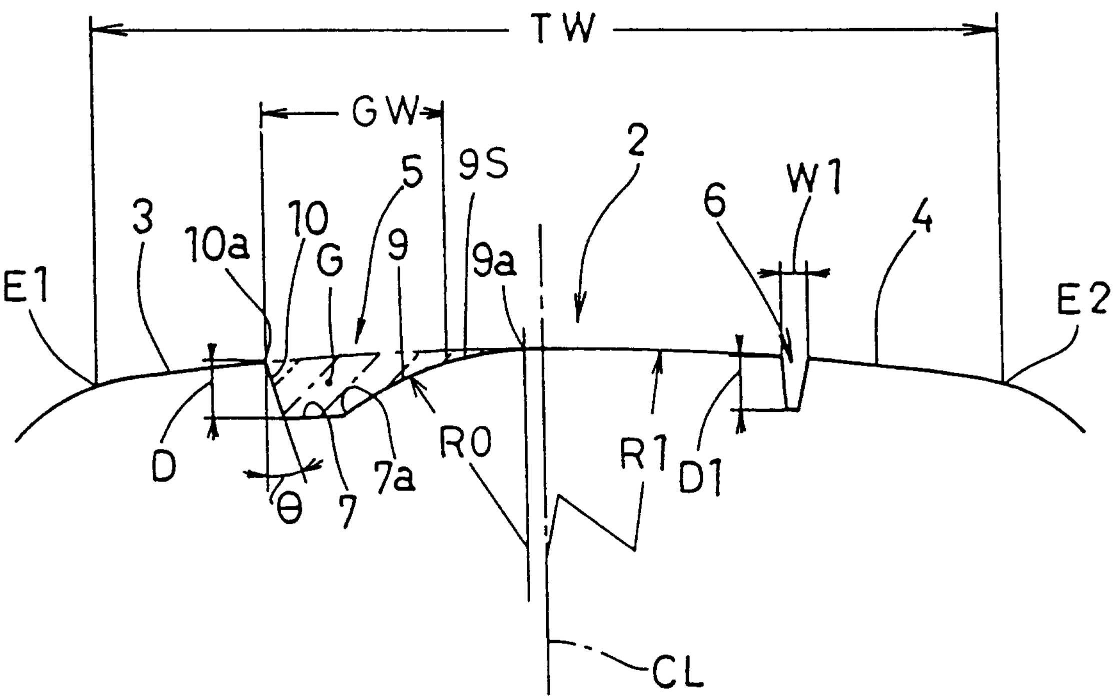

Fig. 3

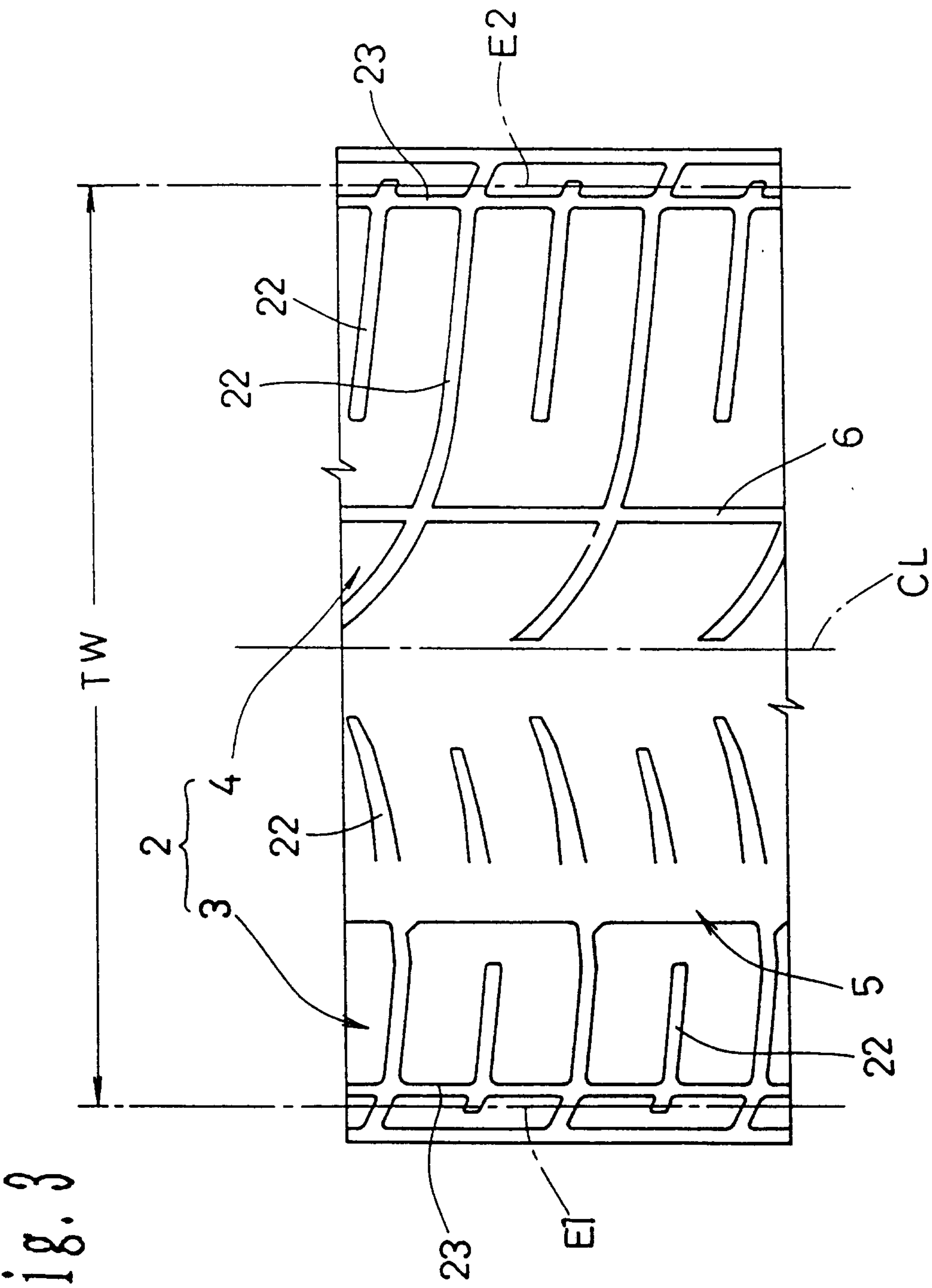

Fig. 4

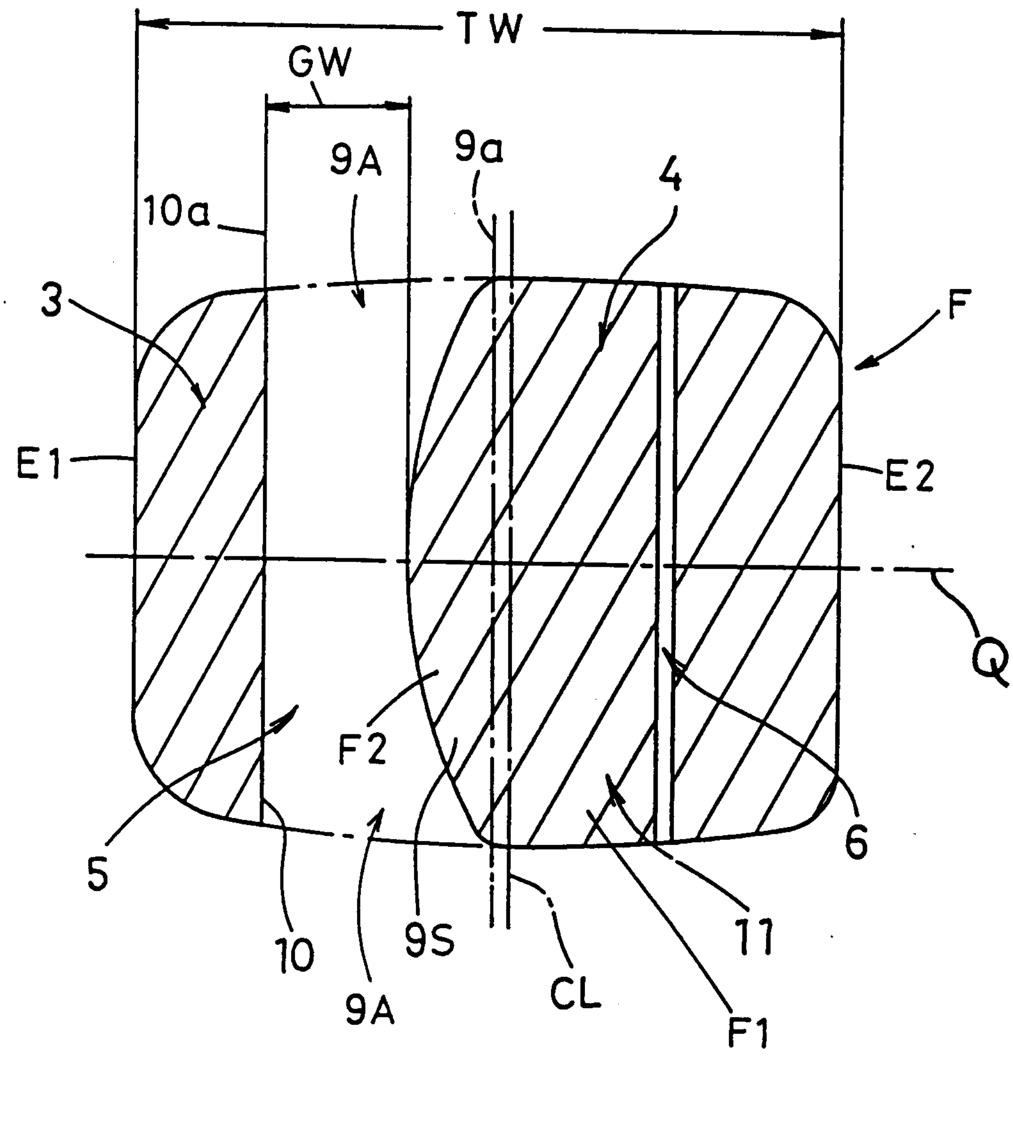

Fig. 5

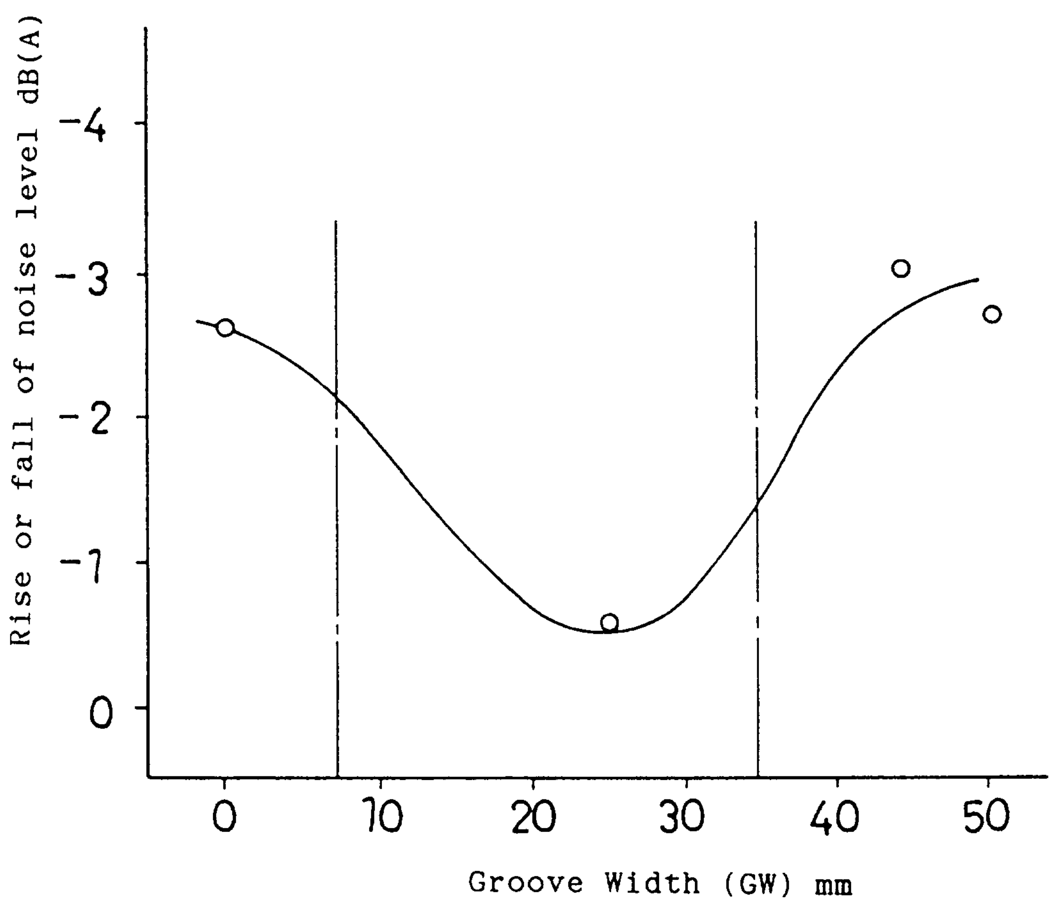
Rise or fall of noise level dB(A)
-4
-3
-2
-1
0
0
10
20
30
40
50
Groove Width (GW) mm

Fig. 6

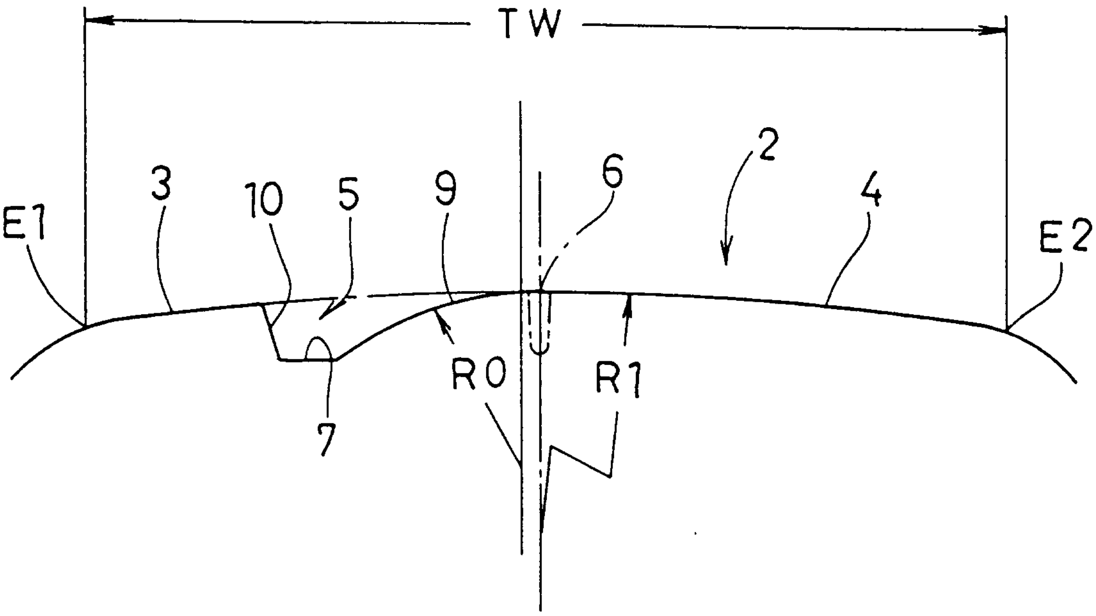

Fig. 7

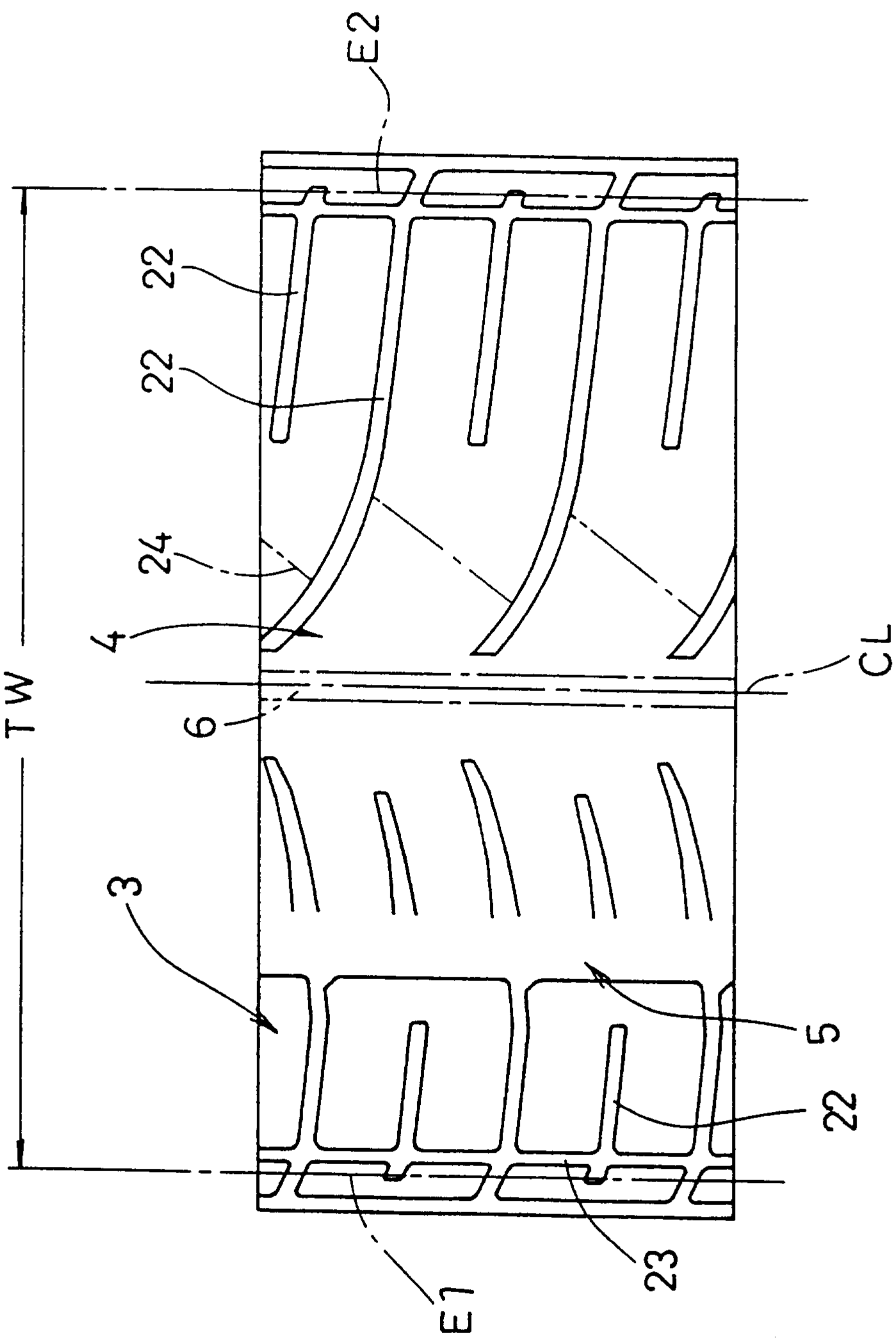

Fig. 8

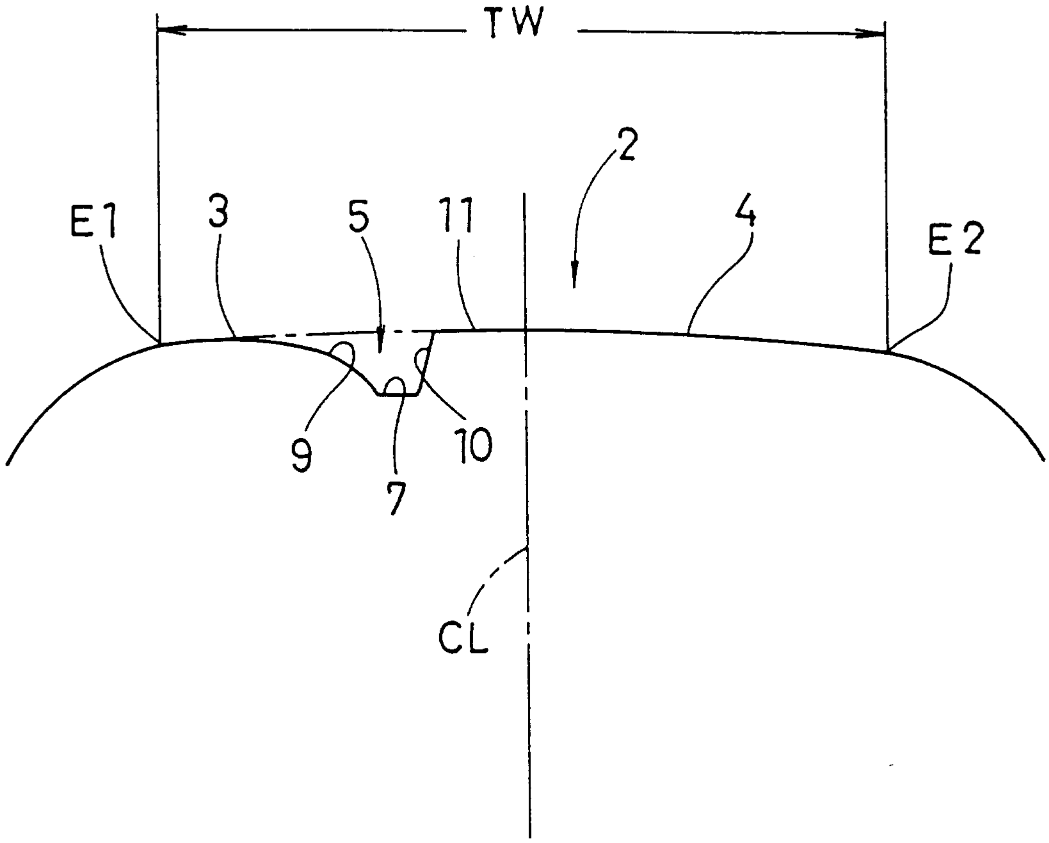

Fig. 9

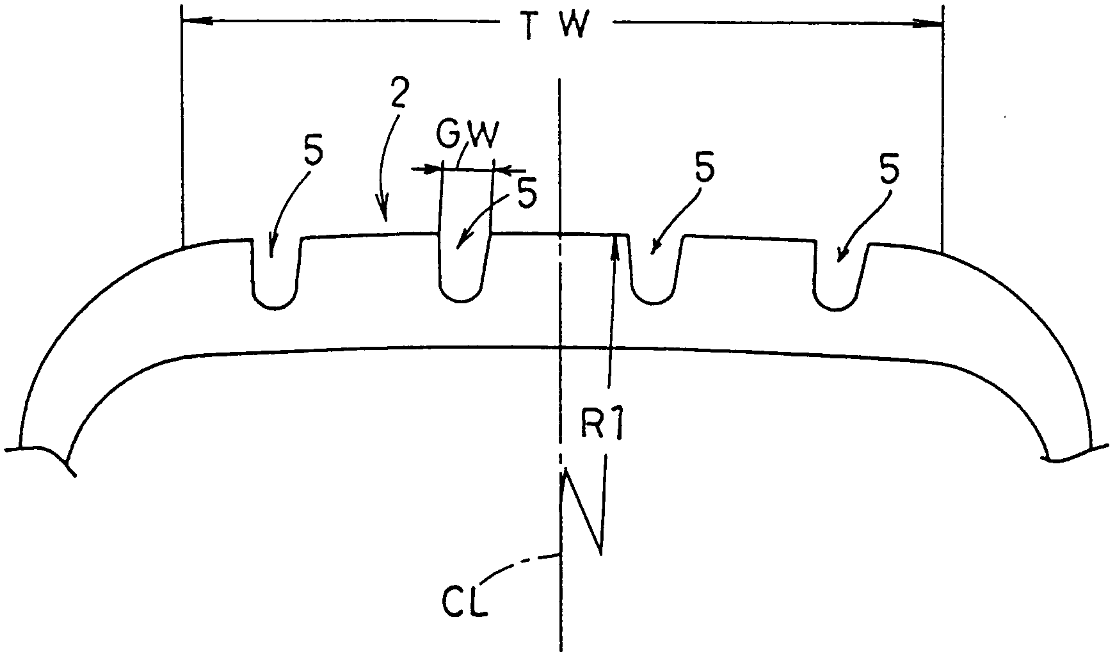


Fig. 10